# FASCICULE DE BREVET EUROPEEN

(11) **EP 3 619 087 B1**
(45) Date de publication et mention de la délivrance du brevet: **24.02.2021**
(21) Numéro de dépôt: 18728437.7
(22) Date de dépôt: 07.05.2018
(51) Int. Cl.: B60W 50/02, B60W 50/029, B60W 50/038, B60W 50/14, B60W 30/14, B60C 23/04

(54) **PROCEDE D'EXPLOITATION DES MESURES DE PRESSION ET DE TEMPERATURE D'UN PNEUMATIQUE D'UN VEHICULE**
VERFAHREN ZUR NUTZUNG VON DRUCK- UND TEMPERATURMESSUNGEN EINES FAHRZEUGREIFENS
METHOD FOR EXPLOITING PRESSURE AND TEMPERATURE MEASUREMENTS OF A VEHICLE TYRE

(30) Priorité: 05.05.2017 FR 1753978
(43) Date de publication de la demande: 11.03.2020
(73) Titulaire: COMPAGNIE GENERALE DES ETABLISSEMENTS MICHELIN, 63000 Clermont-Ferrand (FR)
(72) Inventeur: MUHLHOFF, Olivier, 63040 Clermont-Ferrand Cedex 9 (FR); DELBAST, Arnaud, 63040 Clermont-Ferrand Cedex 9 (FR); FABRE, Aurelien, 63040 Clermont-Ferrand Cedex 9 (FR)
(74) Mandataire: Roussy, Delphine
(86) Numéro de dépôt international: PCT/FR2018/051145
(87) Numéro de publication internationale: WO 2018/203021

(56) Documents cités:
- EP-B1- 0 786 361
- US-A1- 2002 193 932
- US-A1- 2003 033 072

## Description

### Domaine de l'invention

La présente invention est relative à un procédé d'exploitation des mesures d'un système de surveillance des pneumatiques d'un véhicule. Plus particulièrement elle concerne l'exploitation des mesures faites sur les pneumatiques en vue de surveiller leur état en roulage.

### État de la technique

La connaissance des pressions de gonflage des pneumatiques ne suffit pas pour donner au conducteur d'un véhicule une information fiable et utile. La consultation permanente de ces indications risque plus d'être fastidieuse que réellement utile. En effet, les mesures de pression et/ou de température du gaz de gonflage de la cavité interne des pneumatiques varient énormément en roulage en raison de l'échauffement dû aux pertes hystérétiques des mélanges les constituants, de l'influence de la chaleur dégagée par les freins et des transferts de charge qui provoquent de légères variations de volume des pneumatiques. C'est pourquoi les systèmes usuels de surveillance de la pression des pneumatiques d'un véhicule ou TPMS (acronyme de Tire Pressure Monitoring System) se contentent le plus souvent d'alerter le conducteur en cas d'une pression de gonflage d'un pneumatique inférieure à un seuil tel que 1,5 bar pour les véhicules de tourisme, valeur minimale de pression de gonflage selon les recommandations de l'ETRTO (European Tyre and Rim Technical Organization).

Depuis quelques années sont commercialisés des pneumatiques comportant sur leur surface interne une couche de produit auto-obturant. Ces produits élastiques, visqueux ou pâteux ont pour but d'obturer les trous causés par un objet perforant traversant la paroi d'un pneumatique.

Ces produits auto-obturant ne permettent pas d'éliminer complètement le risque d'une mise à plat d'un pneumatique à la suite d'une perforation, mais ont cependant permis de réduire de manière significative ce risque. On note aussi qu'une très grande partie des fuites résiduelles sont des fuites lentes ou très lentes qui peuvent intervenir pendant plusieurs jours voire plusieurs semaines avant d'être détectées par les systèmes actuels de surveillance des pneumatiques ou TPMS.

Le document EP 0 786 361 B1 propose d'ajouter aux alarmes classiques liées au franchissement d'un seuil de pression de gonflage, par exemple 1,5 bars pour les pneumatiques de véhicules de tourisme, une détection précoce d'une fuite d'un pneumatique en suivant l'écart des pressions de gonflage mesurées entre les deux pneumatiques d'un même essieu du véhicule. Une alerte est transmise au conducteur lorsque cet écart dépasse un seuil donné. Ce document propose aussi de transmettre au conducteur une estimation du temps restant avant que la pression de gonflage du pneumatique concerné n'atteigne un seuil critique.

Mais, ce document peut conduire des conducteurs à devoir s'arrêter alors qu'un tel arrêt n'est pas indispensable.

Le document US 2003/033072 A1 propose un procédé de limitation de la vitesse du véhicule. La pression et la température de l'air dans au moins un pneu sont détectées, ainsi que la vitesse du véhicule. Au moins un seuil est déterminé sur la base d'au moins un paramètre de fonctionnement du véhicule. Une détermination est faite pour savoir si la vitesse du véhicule est appropriée ou non pour chaque pneu sur la base de la pression d'air de pneu détectée, de la température de pneu détectée et de chaque seuil déterminé. La vitesse du véhicule est contrôlée automatiquement si la vitesse du véhicule n'est pas appropriée pour chaque pneu.

### Description brève de l'invention

L'invention a pour objet un procédé de traitement des anomalies de gonflage d'un pneumatique d'un véhicule, le pneumatique étant équipé de capteurs de mesure de la pression et de la température de sa cavité interne, dans lequel on mesure périodiquement la pression et la température de cette cavité interne et dès qu'une anomalie de gonflage d'un pneumatique est détectée, on signale au conducteur du véhicule une alerte. Ce procédé est caractérisé en ce qu'on transmet en outre au conducteur du véhicule une consigne de vitesse maximale :
- qui, lorsque la pression de gonflage mesurée du pneumatique est supérieure ou égale à une première valeur seuil de pression de gonflage p₁, est une première valeur de consigne de vitesse maximale V₁; et
- qui, lorsque la pression de gonflage mesurée du pneumatique est inférieure à ladite première valeur seuil de pression p₁ et supérieure ou égale à une deuxième valeur seuil de pression p₂, décroit en fonction de ladite pression de gonflage mesurée du pneumatique.

Ce procédé a ainsi l'avantage de fournir au conducteur une consigne de vitesse maximale à respecter évolutive en fonction de la pression de gonflage mesurée du pneumatique. Le conducteur sait ainsi comment agir à la suite de l'alerte qui lui a été transmise. Par pression de gonflage mesurée, on entend la dernière valeur de pression de gonflage mesurée ou une valeur moyenne ou filtrée des dernières mesures (3 à 5 par exemple).

La vitesse maximale autorisée est calculée de façon à assurer les conditions de sécurité du conducteur du véhicule liées au pneumatique, elle intègre notamment la capacité propre à chaque type de pneumatique de rouler à une pression réduite sans s'endommager ainsi que les performances en décoincement des pneumatiques.

De préférence, la première valeur de consigne de vitesse maximale V₁ est comprise entre 90 et 130 km/h, très préférentiellement comprise entre 90 et 110 km/h.

Cette première valeur de consigne de vitesse maximale est suffisamment élevée pour permettre de poursuivre le trajet souhaité sans atteindre des vitesses susceptibles d'augmenter brutalement les débits de fuite en cas par exemple d'une expulsion d'un objet perforant qui peut être à l'origine de l'anomalie de gonflage du pneumatique.

Selon un premier mode de réalisation, lorsque la pression de gonflage mesurée du pneumatique est comprise entre le premier seuil de pression p₁ et le deuxième seuil de pression p₂, la consigne de vitesse maximale Vₘₐₓ transmise diminue progressivement entre la première valeur de consigne de vitesse maximale V₁ et une deuxième valeur de consigne de vitesse maximale V₂ en fonction de la pression de gonflage mesurée du pneumatique.

Selon un deuxième mode de réalisation, cette diminution de la consigne de vitesse maximale Vₘₐₓ est une diminution par paliers de vitesse en fonction de la pression de gonflage mesurée du pneumatique.

De préférence, lorsque la pression de gonflage mesurée du pneumatique est inférieure à la deuxième valeur seuil de pression de gonflage p₂, la consigne de vitesse maximale transmise est zéro.

La valeur de consigne de vitesse maximale Vₘₐₓ diminue ainsi en fonction de la pression de gonflage du pneumatique concerné lorsque cette pression est comprise entre les deux valeurs seuils de pression p₁ et p₂, et ce n'est que lorsque la pression devient inférieure ou égale à p₂ que le conducteur doit impérativement s'arrêter. Cette diminution progressive de consigne permet ainsi de continuer à rouler sans dommage pour la sécurité du véhicule jusqu'à des valeurs de pression de gonflage bien inférieures aux valeurs usuelles d'alerte des TPMS actuels.

De préférence, la première valeur seuil de pression p₁ peut être comprise entre 1,5 et 2,5 bars, préférentiellement entre 1,5 et 2 bars.

De façon alternative, la première valeur seuil de pression p₁ peut aussi être égale à la pression nominale de gonflage du pneumatique à froid dans le cas d'un véhicule de tourisme.

De préférence, la deuxième valeur seuil de pression p₂ est comprise entre la pression de décoincement du pneumatique de sa jante de montage en roulage et ladite pression de décoincement augmentée de 0,3 bar.

La pression de décoincement d'un pneumatique de sa jante de montage en roulage est la pression à laquelle ce risque de sortie d'un bourrelet du pneumatique de son siège de jante de roue devient notable. Le deuxième seuil de pression de gonflage p₂ doit donc être supérieur à cette valeur de pression de gonflage et dès que ce seuil est franchi, il est impératif de transmettre au conducteur une consigne d'arrêt immédiat du véhicule.

De façon alternative, la deuxième valeur seuil de pression p₂ peut être comprise entre 0,5 bar et 1 bar, préférentiellement comprise entre 0,6 bar et 0,8 bar.

Ces valeurs sont supérieures aux pressions de décoincement de la plupart des pneumatiques pour véhicules de tourisme usuels.

Bien entendu, lorsque le pneumatique comporte des éléments de structure lui permettant de rouler à pression de gonflage nulle, par exemple des renforts de flancs ou des appuis disposés dans la cavité interne, lorsque la pression de gonflage mesurée est inférieure au deuxième seuil p₂, la vitesse de consigne Vₘₐₓ transmise est la vitesse recommandée par le manufacturier du pneumatique et est de l'ordre de 80 km/h.

Les anomalies de gonflage du pneumatique peuvent être notamment la détection d'une perte de pression.

L'invention a aussi pour objet un procédé, dans lequel, pour détecter une anomalie de gonflage du pneumatique :
- on enregistre périodiquement la pression de gonflage p_{g} et la température θ du gaz de la cavité interne du pneumatique ;
- on transforme la pression p_{g} mesurée en pression absolue P_{g} et la température en température absolue T en kelvins, on calcule le rapport P_{g}/T et on obtient une série de valeurs ;
- on détecte une fuite lorsque la variation dans le temps de cette série de valeurs satisfait une relation prédéterminée.

Avantageusement, le pneumatique ayant une valeur de pression de gonflage nominale à froid donnée, le seuil de variation de pression Δp est compris entre 3 et 7 % de ladite valeur de pression de gonflage nominale à froid.

Il est tout à fait possible de détecter une anomalie de gonflage, telle une fuite lente, bien avant que la pression de gonflage du pneumatique concernée soit inférieure à un seuil d'alerte des TPMS actuels. Il est alors important d'avertir le conducteur du véhicule de l'existence d'une anomalie tout en l'autorisant à continuer son trajet à une vitesse maximale limitée mais acceptable.

On peut aussi détecter une fuite de l'un des pneumatiques d'un véhicule en suivant les variations de pression de gonflage entre deux pneumatiques d'un même essieu comme proposé dans le document EP 786 361 A1.

Avantageusement, à partir des valeurs T/P_{g}, on effectue une régression linéaire, on calcule la pente de la droite de régression linéaire, on estime le temps nécessaire pour que la pression de gonflage p_{g} descende en dessous d'un seuil critique de pression et on transmet au conducteur du véhicule cette estimation.

Cette alerte permet au conducteur de gérer au mieux la réparation du pneumatique concerné.

Il est aussi possible d'utiliser une estimation du débit de fuite du pneumatique concerné telle que donnée par le document US 6 868 358 B2.

L'anomalie de gonflage du pneumatique peut aussi être la détection d'une élévation anormale de la température de sa cavité interne.

Le pneumatique comporte avantageusement sur au moins une partie de sa paroi intérieure une couche de produit auto-obturant.

Le véhicule peut aussi comporter un mode de conduite autonome. Dans ce cas on entend par « conducteur du véhicule » l'ensemble des éléments permettant la conduite autonome du véhicule.

Le procédé selon l'un des objets de l'invention est particulièrement adapté dans le cas de tels véhicules car il a l'avantage de limiter très fortement les risques d'une immobilisation forcée.

### Définitions

Les abréviations suivantes sont utilisées dans le texte de la demande :
- p_{g}, pression de gonflage relative du gaz de la cavité interne d'un pneumatique ;
- P_{g}, pression de gonflage absolue ; P_{g} = p_{g} + pₐₜₘ ;
- pₐₜₘ, pression atmosphérique, égale à 101,325 kPa dans des conditions standards ;
- θ, température en degrés Celsius du gaz de la cavité interne d'un pneumatique ;
- T, température absolue en kelvins (degrés Celsius + 273,16) ;
- T_{amb}, température ambiante en kelvin ;
- V, vitesse du véhicule en kilomètre par heure (km/h) ;

### Description des Figures

L'invention est maintenant décrite à l'aide du dessin annexé dans lequel :
- la figure 1 présente un premier exemple d'évolution de la consigne de vitesse maximale dans un diagramme vitesse en fonction de la pression de gonflage ;
- la figure 2 présente un deuxième exemple d'évolution de la consigne de vitesse maximale ; et
- la figure 3 présente une évolution de la consigne de vitesse maximale dans le cas de pneumatiques à mobilité étendue.

### Description détaillée de l'invention

La première étape du procédé selon l'un des objets de l'invention consiste à détecter une anomalie de gonflage d'un pneumatique le plus tôt possible.

La détection d'une anomalie de pression peut se faire de différentes façons.

Les systèmes usuels TPMS déclenchent une alerte lorsque la pression de gonflage relative d'un pneumatique est mesurée en-dessous d'un seuil prédéfini adapté au couple pneumatique-véhicule.

Il est aussi possible d'analyser les variations de pression entre deux pneumatiques d'un même essieu comme proposé par le document EP0786361 A1. Le suivi des écarts de pression entre ces deux pneumatiques permet d'alerter le conducteur dès que cet écart dépasse un seuil donné. Cela permet des alertes précoces, en particulier avant que la pression de gonflage du pneumatique concerné ne franchisse le seuil de déclenchement précédemment cité.

On peut aussi analyser l'évolution de la pression des pneumatiques, pneumatique par pneumatique. Il est alors préférable de suivre la quantité de gaz présent dans la cavité interne des pneumatiques en appliquant la loi des gaz parfaits comme le propose le document EP0315885 B1. On calcule alors l'évolution du rapport entre la pression absolue de gonflage et la température absolue. Ce rapport est lié au nombre de môles de gaz. Ce suivi permet aussi une détection précoce d'une fuite.

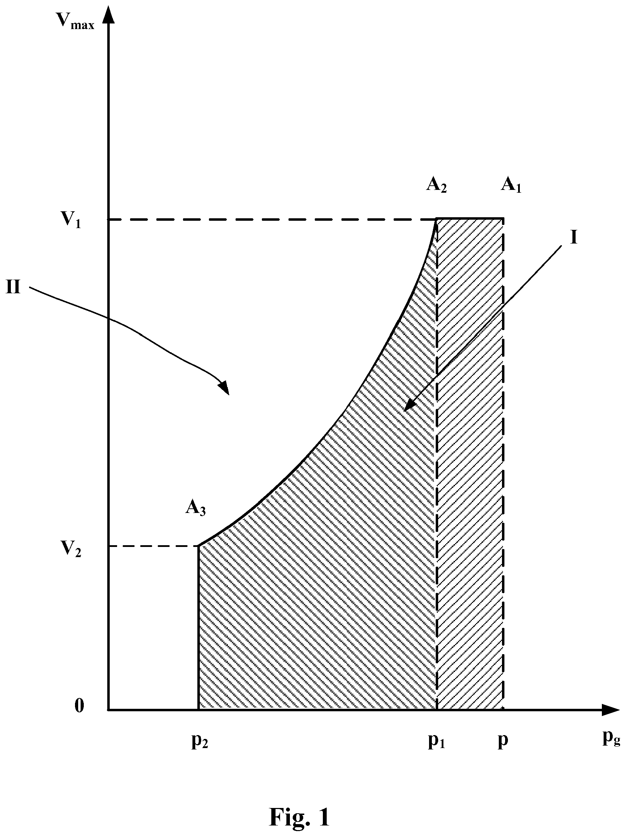

La figure 1 présente un premier exemple de consigne de vitesse maximale à transmettre au conducteur d'un véhicule en fonction de la pression de gonflage mesurée de l'un de ses pneumatiques et après la détection d'une anomalie de gonflage.

Au point A₁, une anomalie de gonflage a été détectée par l'une des méthodes précédemment indiquées. La pression de gonflage mesurée du pneumatique concerné est supérieure au premier seuil de pression p₁. Le pneumatique est toujours en conformité avec son domaine de fonctionnement tel que décrit par l'ETRTO.

Dès la détection, une alerte est transmise au conducteur du véhicule pour lui demander de ne pas dépasser la vitesse V₁. V₁ est suffisamment élevée pour permettre de poursuivre son trajet dans des conditions acceptables mais permet de limiter les risques d'éjection d'un objet perforant, si celui-ci est responsable de la fuite détectée. V₁ est de préférence comprise entre 130 et 90 km/h, très préférentiellement comprise entre 90 et 110 km/h.

Au point A₂, la pression de gonflage correspond au premier seuil critique p₁. En dessous de cette valeur le pneumatique n'est plus en conformité avec les recommandations du constructeur du véhicule, voire celles de l'ETRTO. p₁ est de préférence égal à 1,5 bar ou à la pression de gonflage recommandée à froid du couple pneumatique/véhicule concerné.

À partir de ce moment-là, selon le procédé selon l'un des objets de l'invention, on autorise le conducteur du véhicule à poursuivre sa route mais en lui demandant de diminuer de façon beaucoup plus marquée sa vitesse pour rester dans de bonnes conditions de sécurité.

Au point A₃, la pression de gonflage correspond au deuxième seuil critique p₂. La vitesse de consigne maximale est alors de l'ordre de 50 km/h pour conserver une bonne capacité de direction du véhicule.

En-dessous de ce deuxième seuil critique de pression, le roulage n'est plus autorisé. La consigne de vitesse maximale transmise est zéro, ou arrêt immédiat.

De préférence, cette deuxième valeur seuil de pression p2 est comprise entre la pression de décoincement du pneumatique de sa jante de montage en roulage et cette pression de décoincement augmentée de 0,3 bar. Des valeurs réalistes peuvent être comprises entre 0,5 et 1 bar, préférentiellement entre 0,6 bar et 0,8 bar.

Le document EP1650543 A2 présente une méthode pour déterminer la résistance au décoincement d'un pneumatique monté sur une jante de montage et gonflé à une pression prédéterminée.

Cette méthode consiste à équiper un véhicule avec le pneumatique sur une position d'un essieu directeur ; mettre en mouvement le véhicule et le stabiliser à une vitesse prédéterminée de l'ordre de 40 à 60 km/h ; imposer, par rotation du volant, un angle au volant, et le maintenir pendant un temps prédéterminé, le véhicule avançant à la vitesse prédéterminée de manière à ce que le pneumatique parcoure une portion de trajectoire en arc de cercle ; répéter l'étape précédente en augmentant progressivement l'angle au volant jusqu'à ce qu'au moins une condition choisie parmi (i) le décoincement du pneumatique, ou (ii) l'arrivée à la butée du volant du véhicule, soit satisfaite.

Cette méthode permet d'obtenir une estimation fine de la résistance au décoincement des pneumatiques.

A la figure 1, la consigne de vitesse maximale décroit progressivement entre V1 et V2. La décroissance étant plus rapide à proximité du point A₂.

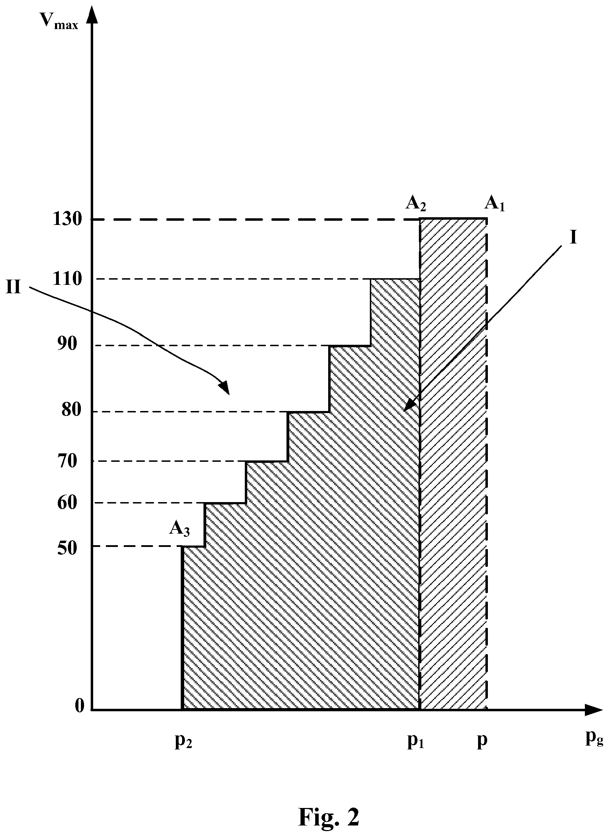

La figure 2 présente un deuxième exemple de consigne de vitesse maximale à transmettre au conducteur d'un véhicule en fonction de la pression de gonflage mesurée de l'un de ses pneumatiques et après la détection d'une anomalie de gonflage.

Dans cet exemple, la consigne de vitesse maximale décroit par paliers de vitesses entre 130 et 50 km/h.

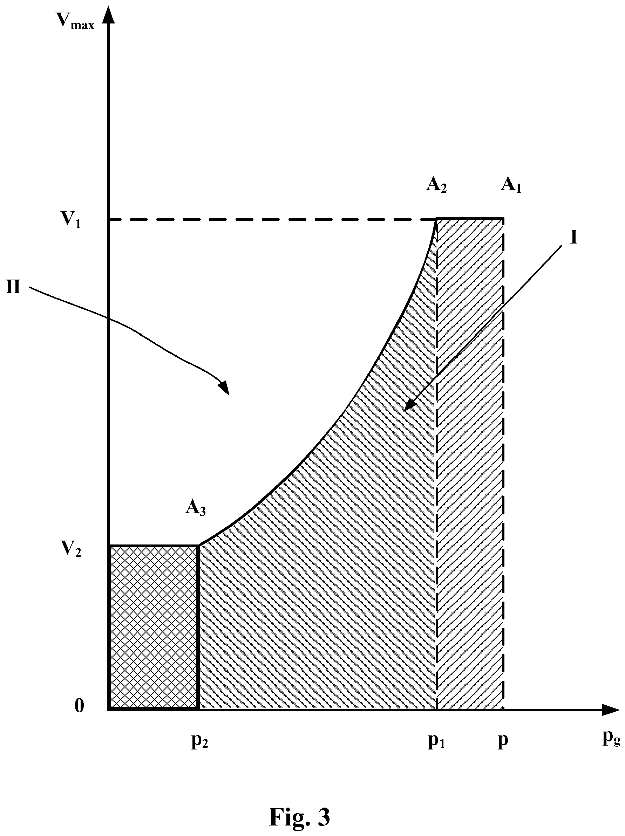

La figure 3 présente un troisième exemple de consigne de vitesse maximale à transmettre au conducteur d'un véhicule en fonction de la pression de gonflage mesurée de l'un de ses pneumatiques et après la détection d'une anomalie de gonflage.

Dans cet exemple, le pneumatique concerné par la détection d'une fuite comporte des éléments de structure lui permettant de rouler à pression de gonflage nulle avec une vitesse et une distance limitées.

Lorsque la pression de gonflage mesurée devient inférieure au deuxième seuil p₂, la vitesse de consigne maximale transmise n'est plus nulle mais la vitesse recommandée par le manufacturier du pneumatique et est de l'ordre de 80 km/h. La distance que peut parcourir un tel pneumatique à pression nulle est aussi limitée, de l'ordre de 80 km.

Les trois figures indiquent ainsi deux zones, une première zone hachurée I autorisée et une deuxième zone II non-hachurée non autorisée.

Ce procédé de transmission au conducteur d'un véhicule d'une consigne de vitesse maximale évolutive en fonction de la pression de gonflage est un complément très utile des méthodes de détection précoce des anomalies de gonflage en donnant au conducteur des consignes précises à respecter pour rester en sécurité tout en lui permettant de poursuivre le roulage en-dehors du domaine usuel de pression.

Ce procédé est particulièrement intéressant dans le cas des pneumatiques comportant des produits auto-obturant ainsi que des véhicules autonomes en limitant fortement les cas d'immobilisation forcée des véhicules.

## Revendications

1. Procédé de traitement des anomalies de gonflage d'un pneumatique d'un véhicule, ledit pneumatique étant équipé de capteurs de mesure de la pression et de la température de la cavité interne dudit pneumatique, dans lequel on mesure périodiquement la pression et la température de la cavité interne du pneumatique et dès qu'une anomalie de gonflage d'un pneumatique est détectée, on signale au conducteur du véhicule une alerte, **caractérisé en ce que** on transmet en outre au conducteur du véhicule une consigne de vitesse maximale :
- qui, lorsque la pression de gonflage mesurée du pneumatique est supérieure ou égale à une première valeur seuil de pression de gonflage p₁, est une première valeur de consigne de vitesse maximale V₁; et
- qui, lorsque la pression de gonflage mesurée du pneumatique est inférieure à ladite première valeur seuil de pression p₁ et supérieure ou égale à une deuxième valeur seuil de pression p₂, décroit en fonction de ladite pression de gonflage mesurée du pneumatique.

2. Procédé selon la revendication 1, dans lequel la première valeur de consigne de vitesse maximale V₁ est comprise entre 90 et 130 km/h, préférentiellement comprise entre 90 et 110 km/h.

3. Procédé selon l'une des revendications 1 et 2, dans lequel, lorsque la pression de gonflage mesurée du pneumatique est comprise entre le premier seuil de pression p₁ et le deuxième seuil de pression p₂, la consigne de vitesse maximale transmise diminue progressivement entre ladite première valeur de consigne de vitesse maximale V₁ et une deuxième valeur de consigne de vitesse maximale V₂ en fonction de la pression de gonflage mesurée du pneumatique.

4. Procédé selon l'une des revendications 1 et 2, dans lequel, lorsque la pression de gonflage du pneumatique est comprise entre le premier seuil de pression p₁ et le deuxième seuil de pression p₂, la consigne de vitesse maximale transmise diminue par paliers de vitesse entre ladite première valeur de consigne de vitesse maximale V₁ et une deuxième valeur de consigne de vitesse maximale V₂ en fonction de la pression de gonflage mesurée du pneumatique.

5. Procédé selon l'une quelconque des revendications précédentes, dans lequel, lorsque la pression de gonflage mesurée du pneumatique est inférieure à ladite deuxième valeur seuil de pression de gonflage p₂, la consigne de vitesse maximale transmise est zéro.

6. Procédé selon l'une quelconque des revendications précédentes, dans lequel la première valeur seuil de pression p₁ est égale à la pression nominale de gonflage dudit pneumatique à froid.

7. Procédé selon l'une quelconque des revendications 1 à 5, dans lequel la première valeur seuil de pression p₁ est comprise entre 1,5 et 2,5 bars, préférentiellement entre 1,5 et 2 bars.

8. Procédé selon l'une quelconque des revendications précédentes, dans lequel la deuxième valeur seuil de pression p₂ est comprise entre la pression de décoincement du pneumatique de sa jante de montage en roulage et ladite pression de décoincement augmentée de 0,3 bar.

9. Procédé selon l'une quelconque des revendications 1 à 7, dans lequel la deuxième valeur seuil de pression p₂ est comprise entre 0,5 bar et 1 bar, préférentiellement comprise entre 0,6 bar et 0,8 bar.

10. Procédé selon l'une quelconque des revendications 1 à 4, dans lequel, le pneumatique comportant des éléments de structure lui permettant de rouler à pression de gonflage nulle, lorsque la pression de gonflage mesurée est inférieure audit deuxième seuil p₂, la vitesse de consigne transmise est la vitesse recommandée par le manufacturier du pneumatique et est de l'ordre de 80 km/h.

11. Procédé selon l'une quelconque des revendications précédentes, dans lequel l'anomalie de gonflage du pneumatique est la détection d'une perte de pression et/ou la détection d'une élévation anormale de température.

12. Procédé selon la revendication 11, dans lequel pour détecter une anomalie de gonflage du pneumatique :
- on enregistre périodiquement la pression p_{g} et la température θ du gaz de la cavité interne du pneumatique ;
- on transforme la pression p_{g} mesurée en pression absolue P_{g} et la température θ en température absolue T, on calcule le rapport P/T et on obtient une série de valeurs ;
- on détecte une fuite lorsque la variation dans le temps de cette série de valeurs satisfait une relation prédéterminée.

13. Procédé selon la revendication 12, dans lequel, le pneumatique ayant une valeur de pression de gonflage nominale à froid p₀ donnée, le seuil de variation de pression Δp est compris entre 3 et 7 % de ladite valeur de pression de gonflage nominale à froid.

14. Procédé selon l'une des revendications 12 et 13, dans lequel, à partir des valeurs T/P_{g}, on effectue une régression linéaire, on calcule la pente de la droite de régression linéaire, on estime le temps nécessaire pour que la pression de gonflage p_{g} descende en dessous d'un seuil critique de pression et on transmet au conducteur du véhicule cette estimation.

15. Procédé selon l'une quelconque des revendications précédentes, dans lequel le pneumatique comporte sur sa paroi intérieure une couche de produit auto-obturant.

## Patentansprüche

1. Verfahren zur Behandlung von Füllanomalien eines Reifens eines Fahrzeugs, wobei der Reifen mit Sensoren zum Messen des Drucks und der Temperatur des Innenhohlraums des Reifens ausgestattet ist, wobei der Druck und die Temperatur des Innenhohlraums des Reifens in periodischen Abständen gemessen werden und, sobald eine Füllanomalie eines Reifens festgestellt wird, dem Fahrer des Fahrzeugs eine Warnmeldung übermittelt wird, **dadurch gekennzeichnet, dass** dem Fahrer des Fahrzeugs ferner ein Höchstgeschwindigkeitssollwert übermittelt wird:
- der, wenn der gemessene Reifenfülldruck größer als oder so groß wie ein erster Fülldruckschwellenwert p₁ ist, ein erster Höchstgeschwindigkeitssollwert V₁ ist und
- der, wenn der gemessene Reifenfülldruck kleiner als der erste Druckschwellenwert p₁ und größer als oder so groß wie ein zweiter Druckschwellenwert p₂ ist, in Abhängigkeit vom gemessenen Reifenfülldruck abnimmt.

2. Verfahren nach Anspruch 1, wobei der erste Höchstgeschwindigkeitssollwert V₁ zwischen 90 und 130 km/h, vorzugsweise zwischen 90 und 110 km/h, liegt.

3. Verfahren nach einem der Ansprüche 1 und 2, wobei, wenn der gemessene Reifenfülldruck zwischen dem ersten Druckschwellenwert p₁ und dem zweiten Druckschwellenwert p₂ liegt, der übertragene Höchstgeschwindigkeitssollwert in Abhängigkeit vom gemessenen Reifenfülldruck progressiv zwischen dem ersten Höchstgeschwindigkeitssollwert V₁ und einem zweiten Höchstgeschwindigkeitssollwert V₂ abnimmt.

4. Verfahren nach einem der Ansprüche 1 und 2, wobei, wenn der gemessene Reifenfülldruck zwischen dem ersten Druckschwellenwert p₁ und dem zweiten Druckschwellenwert p₂ liegt, der übertragene Höchstgeschwindigkeitssollwert in Abhängigkeit vom gemessenen Reifenfülldruck in Geschwindigkeitsstufen zwischen dem ersten Höchstgeschwindigkeitssollwert V₁ und einem zweiten Höchstgeschwindigkeitssollwert V₂ abnimmt.

5. Verfahren nach einem der vorangehenden Ansprüche, wobei, wenn der gemessene Reifenfülldruck kleiner als der zweite Fülldruckschwellenwert p₂ ist, der übertragene Höchstgeschwindigkeitssollwert Null ist.

6. Verfahren nach einem der vorangehenden Ansprüche, wobei der erste Druckschwellenwert p₁ gleich dem Nennfülldruck des Reifens im kalten Zustand ist.

7. Verfahren nach einem der Ansprüche 1 bis 5, wobei der erste Druckschwellenwert p₁ zwischen 1,5 und 2,5 bar, vorzugsweise zwischen 1,5 bis 2 bar, liegt.

8. Verfahren nach einem der vorangehenden Ansprüche, wobei der zweite Druckschwellenwert p₂ zwischen dem Ablösedruck des Reifens von seiner Montagefelge beim Fahren und dem um 0,3 bar erhöhten Ablösedruck liegt.

9. Verfahren nach einem der Ansprüche 1 bis 7, wobei der zweite Druckschwellenwert p₂ zwischen 0,5 bar und 1 bar, vorzugsweise zwischen 0,6 bar und 0,8 bar, liegt.

10. Verfahren nach einem der Ansprüche 1 bis 4, wobei, wenn der Reifen Strukturelemente aufweist, die es ihm erlauben, mit einem Fülldruck von Null zu fahren, die übertragene Sollgeschwindigkeit die vom Reifenhersteller empfohlene Geschwindigkeit ist und im Bereich von 80 km/h liegt, wenn der gemessene Fülldruck kleiner als der zweite Schwellenwert p₂ ist.

11. Verfahren nach einem der vorangehenden Ansprüche, wobei die Füllanomalie des Reifens die Erfassung eines Druckverlusts und/oder die Erfassung eines abnormalen Temperaturanstiegs ist.

12. Verfahren nach Anspruch 11, wobei zum Erfassen einer Füllanomalie des Reifens:
- der Druck p_{g} und die Temperatur θ des Gases im Innenhohlraum des Reifens periodisch aufgezeichnet werden;
- der gemessene Druck p_{g} in absoluten Druck P_{g} und die Temperatur θ in absolute Temperatur T umgewandelt, das Verhältnis P/T berechnet und eine Reihe von Werten erhalten werden;
- ein Leck erkannt wird, wenn eine zeitliche Variation dieser Wertereihe einem vorbestimmten Verhältnis entspricht.

13. Verfahren nach Anspruch 12, wobei, wenn der Reifen einen gegebenen Nennfülldruck p₀ im kalten Zustand aufweist, die Schwelle der Druckänderung Δp zwischen 3 und 7 % des gemessenen Nennfülldrucks im kalten Zustand liegt.

14. Verfahren nach einem der Ansprüche 12 und 13, wobei anhand der Werte T/P_{g} eine lineare Regression durchgeführt wird, die Steigung der linearen Regressionsgeraden berechnet wird, die Zeit, die erforderlich ist, bis der Fülldruck p_{g} unter einen kritischen Druckschwellenwert sinkt, geschätzt wird und diese Schätzung an den Fahrer des Fahrzeugs übertragen wird.

15. Verfahren nach einem der vorangehenden Ansprüche, wobei der Reifen an seiner Innenwand eine Schicht aus selbstabdichtendem Produkt aufweist.

## Claims

1. Method for processing inflation defects of a tyre of a vehicle, said tyre being equipped with sensors for measuring the pressure and the temperature of the internal cavity of said tyre, in which the pressure and temperature of the internal cavity of the tyre are measured periodically and, as soon as an inflation defect of a tyre is detected, an alert is signalled to the driver of the vehicle, **characterized in that** there is also transmitted to the driver of the vehicle a maximum speed setpoint:
- which, when the measured inflation pressure of the tyre is greater than or equal to a first inflation pressure threshold value p₁, is a first maximum speed setpoint value V₁; and
- which, when the measured inflation pressure of the tyre is less than said first pressure threshold value p₁ and greater than or equal to a second pressure threshold value p₂, decreases as a function of said measured inflation pressure of the tyre.

2. Method according to Claim 1, in which the first maximum speed setpoint value V₁ lies between 90 and 130 km/h, preferentially between 90 and 110 km/h.

3. Method according to one of Claims 1 and 2, in which, when the measured inflation pressure of the tyre lies between the first pressure threshold p₁ and the second pressure threshold p₂, the maximum speed setpoint transmitted decreases progressively between said first maximum speed setpoint value V₁ and a second maximum speed setpoint value V₂ as a function of the measured inflation pressure of the tyre.

4. Method according to one of Claims 1 and 2, in which, when the inflation pressure of the tyre lies between the first pressure threshold p₁ and the second pressure threshold p₂, the maximum speed setpoint transmitted decreases by speed levels between said first maximum speed setpoint value V₁ and a second maximum speed setpoint value V₂ as a function of the measured inflation pressure of the tyre.

5. Method according to any one of the preceding claims, in which, when the measured inflation pressure of the tyre is less than said second inflation pressure threshold value p₂, the maximum speed setpoint transmitted is zero.

6. Method according to any one of the preceding claims, in which the first pressure threshold value p₁ is equal to the nominal inflation pressure of said tyre when cold.

7. Method according to any one of Claims 1 to 5, in which the first pressure threshold value p₁ lies between 1.5 and 2.5 bar, preferentially between 1.5 and 2 bar.

8. Method according to any one of the preceding claims, in which the second pressure threshold value p₂ lies between the unseating pressure of the tyre from its rim while rolling and said unseating pressure plus 0.3 bar.

9. Method according to any one of Claims 1 to 7, in which the second pressure threshold value p₂ lies between 0.5 bar and 1 bar, preferentially between 0.6 bar and 0.8 bar.

10. Method according to any one of Claims 1 to 4, in which, the tyre comprising structural elements allowing it to roll at zero inflation pressure, when the measured inflation pressure is less than said second threshold p₂, the setpoint speed transmitted is the speed recommended by the manufacturer of the tyre and is of the order of 80 km/h.

11. Method according to any one of the preceding claims, in which the inflation defect of the tyre is the detection of a loss of pressure.

12. Method according to Claim 11, in which, to detect an inflation defect of the tyre:
- the pressure p_{g} and the temperature θ of the gas of the internal cavity of the tyre are recorded periodically;
- the measured pressure p_{g} is transformed into absolute pressure P_{g} and the temperature θ is transformed into absolute temperature T, the P/T ratio is calculated and a series of values is obtained;
- a leak is detected when the variation over time of this series of values satisfies a predetermined relationship.

13. Method according to Claim 12, in which, the tyre having a given nominal inflation pressure value when cold p₀, the pressure variation threshold Δp lies between 3 and 7% of said nominal inflation pressure value when cold.

14. Method according to one of Claims 12 and 13, in which, from the T/P_{g} values, a linear regression is performed, the slope of the linear regression straight line is calculated, the time needed for the inflation pressure p_{g} to drop below a critical pressure threshold is estimated and this estimation is transmitted to the driver of the vehicle.

15. Method according to any one of the preceding claims, in which the tyre comprises, on its inner wall, a layer of self-sealant product.
